# EUROPEAN PATENT APPLICATION

(11) **EP 4 687 054 A1**
(43) Date of publication of application: **04.02.2026**
(21) Application number: 25177754.6
(22) Date of filing: 20.05.2025
(51) Int. Cl.: G06F 21/10, G06N 20/00, G06F 16/11, G06F 16/182, H04L 9/06

(54) **METHOD AND SYSTEM FOR CONTROLLING USAGE PERMISSION OF TRAINING DATA**

(30) Priority: 29.07.2024 TW 113128089
(71) Applicant: Acer Incorporated, New Taipei City 221 (TW); Winking Entertainment Corporation, Taipei City, Taiwan (R.O.C.) (TW)
(72) Inventor: LIU, Tung-Mei, Taipei City (TW)
(74) Representative: Haseltine Lake Kempner LLP

(57) **Abstract**

A method and system for controlling a usage permission of training data (201(1) to 201(n), 301(1) to 301(n)) are provided. The method includes: obtaining source verification information (302(1) to 302(n)) corresponding to first training data; confirming a source of the first training data based on the source verification information (302(1) to 302(n)); enabling a usage permission corresponding to the first training data if the source of the first training data meets a predetermined condition and training a computing model (101) based on the first training data; and disabling the usage permission corresponding to the first training data if the source of the first training data does not meet the predetermined condition.

## Description

### BACKGROUND

### Technical Field

The disclosure relates to a method and system for controlling a usage permission of training data.

### Description of Related Art

With the continuous advancement of artificial intelligence technology, the use of artificial intelligence models to assist in executing automated behaviors such as image detection, image generation, semantic analysis, or intelligent control has become increasingly common. During the construction phase of artificial intelligence models, developers need to use a large amount of training data to train the artificial intelligence models, so as to improve the working performance of the artificial intelligence models.

However, if the source or acquisition of the aforementioned training data cannot be effectively controlled, disputes related to the ownership of the training data used may easily occur in the subsequent process of using the artificial intelligence models.

### SUMMARY

The disclosure provides a method and system for controlling a usage permission of training data capable of solving the abovementioned problems.

An embodiment of the disclosure provides a method for controlling a usage permission of training data, and the method includes the following steps. Source verification information corresponding to first training data is obtained. A source of the first training data is confirmed based on the source verification information. If the source of the first training data meets a predetermined condition, a usage permission corresponding to the first training data is enabled, and a computing model is trained based on the first training data. If the source of the first training data does not meet the predetermined condition, the usage permission corresponding to the first training data is disabled.

An embodiment of the disclosure further provides a system for controlling a usage permission of training data, and the system includes a communication circuit, a storage circuit, and a processor. The storage circuit is configured to store a computing model. The processor is coupled to the communication circuit and the storage circuit. The processor is configured to obtain, through the communication circuit, source verification information corresponding to first training data, confirm a source of the first training data based on the source verification information, enable the usage permission corresponding to the first training data if the source of the first training data meets a predetermined condition and train the computing model based on the first training data, and disable the usage permission corresponding to the first training data if the source of the first training data does not meet the predetermined condition.

Based on the above, after obtaining the source verification information corresponding to the first training data, the system automatically confirms the source of the first training data based on the source verification information. If the confirmation result reflects that the source of the first training data meets the predetermined condition, the system automatically enables the usage permission corresponding to the first training data and trains the computing model based on the first training data. However, if the confirmation result reflects that the source of the first training data does not meet the predetermined condition, the system disables the usage permission corresponding to the first training data. In other words, the system automatically controls the usage permission of the training data according to the source of the training data, and in this way, disputes that may arise in the future due to unclear sources of training data or using unauthorized training data to train the computing model are effectively lowered.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic view illustrating a system for controlling a usage permission of training data according to an embodiment of the disclosure.
FIG. 2 is a schematic view illustrating execution of controlling the usage permission of the training data based on a block chain network to an embodiment of the disclosure.
FIG. 3 is a schematic view illustrating execution of controlling the usage permission of the training data according to an embodiment of the disclosure.
FIG. 4 is a flow chart illustrating a method for controlling a usage permission of training data according to an embodiment of the disclosure.

### DESCRIPTION OF THE EMBODIMENTS

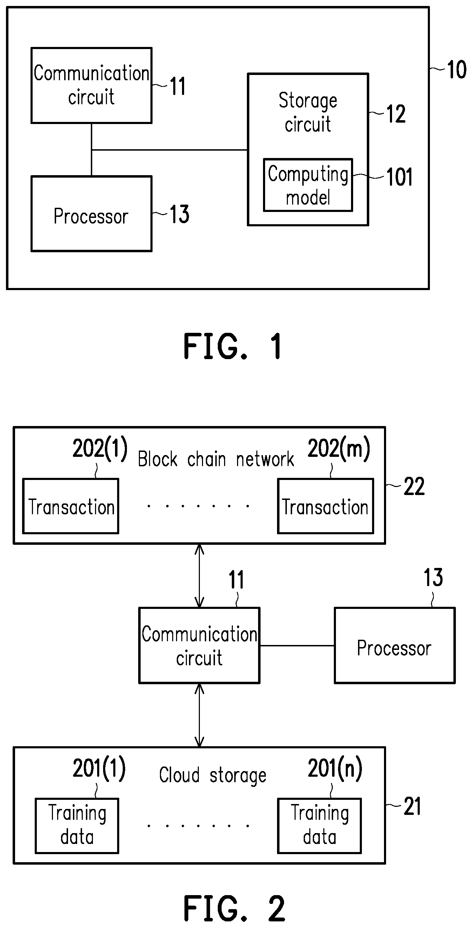

FIG. 1 is a schematic view illustrating a system for controlling a usage permission of training data according to an embodiment of the disclosure. Referring to FIG. 1, a system (also referred to as a system for controlling a usage permission of training data) 10 may be implemented in various electronic apparatuses with communication and data processing functions, such as Smartphones, tablet computers, laptop computers, desktop computers, servers, or industrial computers, and the types of the electronic apparatuses are not limited to herein.

The system 10 includes a c 11, a storage circuit 12, and a processor 13. The communication circuit 11 is configured to execute wired or wireless communication functions to transmit a signal through wired or wireless methods. For example, the communication circuit 11 may include a communication interface card (such as a network interface card). The communication circuit 11 may support wireless communication standards such as WiFi, Bluetooth, near-field communication (NFC), 3G, 4G, or 5G, or wired communication standards such as Ethernet to transmit a signal. Alternatively, the communication circuit 11 may also support other communication standards, which is not limited by the disclosure. However, the disclosure does not limit the number and type of the communication circuit 11.

The storage circuit 12 is configured to store data. For instance, the storage circuit 12 may include a volatile storage circuit and a non-volatile storage circuit. The volatile storage circuit is used to volatilely store data. For instance, the volatile storage circuit may include random access memory (RAM) or similar volatile storage media. The non-volatile storage circuit is used to non-volatilely store data. For instance, the non-volatile storage circuit may include a read only memory (ROM), a solid state disk (SSD), a conventional hard disk drive (HDD), or similar non-volatile storage media. However, the disclosure does not limit the number and type of the storage circuit 12.

The processor 13 is coupled to the communication circuit 11 and the storage circuit 12. The processor 13 is used to be responsible for the overall or partial operation of the system 10. For instance, the processor 13 may include a central processing unit (CPU), a graphic processing unit (GPU), a programmable microprocessor for general or special use, a digital signal processor (DSP), a programmable controller, an application specific integrated circuit (ASIC), a programmable logic device (PLD), other similar devices, or a combination of the foregoing devices.

In an embodiment, the processor 13 may also include a specialized processor to assist in executing logical operations (such as neural network computation and/or image processing), such as a vision processing unit (VPU), a neural network processing unit (NPU), and/or a tensor processing unit (TPU). However, the disclosure does not limit the number and type of the processor 13.

In an embodiment, the system 10 may also include a power management circuit, various input/output devices or peripheral devices such as a mouse, a keyboard, a display, a speaker, and/or a microphone, and the types of input/output interfaces and peripheral devices are not limited herein.

In an embodiment, the storage circuit 12 stores a computing model 101. The computing model 101 may be used to execute logical operations (such as neural network computation and/or image processing). For instance, the computing model 101 may use a convolutional neural network (CNN), a recurrent neural network (RNN), a long short term memory (LSTM) model, a deep neural network (DNN), or other types of logical computation architectures to implement the required functions. However, the disclosure does not limit the number and type of the computing model 101.

In an embodiment, the processor 13 may obtain verification information (also referred to as source verification information) corresponding to specific training data (also referred to first training data). The processor 13 may confirm a source of the first training data based on this source verification information. Specifically, if a confirmation result for the source of the first training data reflects that the source of the first training data meets a specific condition (also referred to as a predetermined condition), the processor 13 may automatically enable a usage permission corresponding to the first training data.

In an embodiment, when the usage permission corresponding to the first training data is enabled, the processor 13 may (be allowed to) train the computing model 101 based on the first training data. For instance, when the usage permission corresponding to the first training data is enabled, the processor 13 may add the first training data to a training data set corresponding to the computing model 101. The processor 13 may input training data (including the first training data) from the training data set one by one into the computing model 101 and use verification data corresponding to each training data to verify output of the computing model 101. Next, the processor 13 may adjust at least some parameters (such as a weight parameter) used by the computing model 101 according to a verification result (such as a difference between the output of the computing model 101 and the verification data). Therefore, through using the first training data to train the computing model 101, computation performance of the computing model 101 may be improved.

In an embodiment, if the confirmation result reflects that the source of the first training data does not meet the predetermined condition, the processor 13 may disable the usage permission corresponding to the first training data. Specifically, if the usage permission corresponding to the first training data is not enabled, the processor 13 may not (be allowed to) train the computing model 101 based on the first training data. In an embodiment, if the usage permission corresponding to the first training data is not enabled, the processor 13 may also prohibit training the computing model 101 based on the first training data.

From another perspective, in an embodiment, the processor 13 only allows the use of the first training data to train the computing model 101 in a situation where the usage permission corresponding to the first training data has been enabled (that is, the source of the first training data meets the predetermined condition). In this way, disputes that may arise in the future due to unclear sources of training data or using unauthorized training data to train the computing model 101 may be effectively lowered.

In an embodiment, the processor 13 may obtain information related to the source of the first training data based on the source verification information. For instance, this information may reflect a user name and/or an organization name of a provider of the first training data, upload time of the first training data, an upload location of the first training data, an Internet protocol (IP) address of an upload device (also referred to as a first remote device) of the first training data, a name of the first remote device and/or a type of the first remote device, etc. The processor 13 may then confirm the source of the first training data based on this information.

In an embodiment, after confirming the source of the first training data, the processor 13 may determine whether the source of the first training data meets the predetermined condition. For instance, it is assumed that a current filtering condition (i.e., the predetermined condition) set for the training data is that a personnel or an organization uploading the training data (i.e., a provider of the training data) must be a personnel or an organization that meet a specific condition (also referred to as a target user). In this situation, the processor 13 may determine whether the source of the first training data is the target user. If the source of the first training data is the target user, the processor 13 may determine that the source of the first training data meets the predetermined condition. However, if the source of the first training data is not the target user, the processor 13 may determine that the source of the first training data does not meet the predetermined condition. It should be noted that the filtering condition (i.e., the predetermined condition) may be adjusted according to practical needs, which is not limited by the disclosure.

In an embodiment, the provider of the first training data may upload the source verification information corresponding to the first training data to a block chain network in advance. For instance, the source verification information corresponding to the first training data may be attached to a block chain transaction (also referred to as a first transaction) and uploaded to the block chain network through this transaction (i.e., the first transaction). Afterwards, the processor 13 may get the source verification information from the block chain network.

In an embodiment, after obtaining the source verification information from the block chain network, the processor 13 may confirm whether the source of the first training data meets the predetermined condition based on block chain verification technology. For instance, according to the block chain verification technology, the processor 13 may confirm whether the transaction (i.e., the first transaction) carrying the source verification information in the block chain network is published by the target user. If the first transaction is published by the target user, the processor 13 may determine that the source of the first training data meets the predetermined condition. Next, the processor 13 may enable the usage permission corresponding to the first training data. However, if the first transaction is not published by the target user, the processor 13 may determine that the source of the first training data does not meet the predetermined condition.

In an embodiment, if the usage permission corresponding to the first training data is enabled, the processor 13 may further obtain a transaction record (also referred to as a first transaction record) corresponding to the first training data from the block chain network. For instance, the processor 13 may obtain the first transaction record from the first transaction. After obtaining the first transaction record, the processor 13 may obtain location information (also referred to as storage location information) corresponding to the first training data from the first transaction record. For instance, this storage location information may be stored in a form of a uniform resource identifier (URI) or other forms in the first transaction record. Next, the processor 13 may download the first training data from a cloud storage according to this storage location information.

In an embodiment, the cloud storage may include a cloud storage provided by major cloud service providers (e.g., Google, Microsoft, or Amazon, etc.) or a cloud storage maintained and/or controlled by any individual, organization, or group. The provider of the first training data may upload the first training data to the cloud storage for storage in advance.

In an embodiment, the storage location information may point to a resource address in the cloud storage for storing or downloading the first training data. According to the storage location information, the processor 13 may download the first training data from this resource address.

FIG. 2 is a schematic view illustrating execution of controlling the usage permission of the training data based on a block chain network to an embodiment of the disclosure. Referring to FIG. 2, it is assumed that a plurality of pieces of training data 201(1) to 201(n) are stored in a cloud storage 21. The training data 201(1) to 201(n) may include image data, text data, audio data, or other types of data, as long as they can be used for model training. In an embodiment, it is assumed that the training data 201(i) is the first training data. For instance, the training data 201(i) is uploaded to the cloud storage 21 by a specific user through the first remote device.

In an embodiment, before or after the specific user uploads the training data 201(i) to the cloud storage 21, the specific user may further create a transaction 202(i) (i.e., the first transaction) in a block chain network 22 through the first remote device. Specifically, the specific user may attach the storage location information corresponding to the training data 201(i) to the transaction 202(i) through the first remote device and publish the transaction 202(i) to the block chain network 22. For instance, after the transaction 202(i) is published to the block chain network 22, the transaction 202(i) may be linked to transactions 202(1) to 202(m) in the block chain network 22.

In an embodiment, the processor 13 may identify the transaction 202(i) from the block chain network 22 through the communication circuit 11. For instance, the processor 13 may identify the transaction 202(i) from the block chain network 22 by referencing transaction information provided by the specific user. The processor 13 may then parse the transaction 202(i) based on the block chain verification technology to confirm whether the transaction 202(i) is published by the target user. In response to the transaction 202(i) being published by the target user, the processor 13 may determine that a source of the training data 201(i) meets the predetermined condition. The processor 13 may then enable the usage permission corresponding to the training data 201(i). However, if the transaction 202(i) is not published by the target user (i.e., the user who publishes the transaction 202(i) is not the target user), the processor 13 may determine that the source of the training data 201(i) does not meet the predetermined condition. If the source of the training data 201(i) does not meet the predetermined condition, the processor 13 may disable the usage permission corresponding to the training data 201(i).

In an embodiment, after enabling the usage permission corresponding to the training data 201(i), the processor 13 may further obtain the storage location information corresponding to the training data 201(i) from a transaction record (i.e., the first transaction record) of the transaction 202(i). For instance, this storage location information may be stored in the form of a uniform resource identifier (URI) or other forms in the transaction 202(i). For instance, this storage location information may point to a resource address in the cloud storage 21 for storing or downloading the training data 201(i). According to this storage location information, the processor 13 may download the training data 201(i) from the resource address in the cloud storage 21 through the communication circuit 11. The processor 13 may then use the training data 201(i) to train the computing model 101 of FIG. 1.

It should be noted that in another embodiment of FIG. 2, in the situation where the usage permission corresponding to the training data 201(i) is disabled, the processor 13 may not download the training data 201(i) from the cloud storage 21, and even more so may not use the training data 201(i) to train the computing model 101 of FIG. 1. In this way, subsequent disputes related to the ownership of the training data used may be avoided, and the legal usage permission for the training data may be ensured.

In an embodiment, the provider of the first training data may also upload the source verification information corresponding to the first training data to the cloud storage in advance. Afterwards, the processor 13 may obtain the source verification information from the cloud storage.

In an embodiment, after obtaining the source verification information from the cloud storage, the processor 13 may confirm the source of the first training data based on digital verification technology. For instance, the digital verification technology may include digital signature technology or any digital analysis technology that can be used for identity verification.

Taking the digital signature technology as an example, after obtaining the source verification information from the cloud storage, the processor 13 may determine whether the source verification information is signed by the target user based on the digital signature technology. If the source verification information is indeed signed by the target user, the processor 13 may confirm that the source of the first training data meets the predetermined condition. Next, the processor 13 may enable the usage permission corresponding to the first training data. Alternatively, if the source verification information is not signed by the target user, the processor 13 may confirm that the source of the first training data does not meet the predetermined condition.

In an embodiment, the source verification information may also be information recording the provider of the first training data in a plain or coded form. The processor 13 may confirm whether the source of the first training data meets the predetermined condition according to the source verification information. For instance, if the source verification information records in a plain or coded form that the provider of the first training data is the target user, then the processor 13 (after executing relevant decoding procedures on the source verification information) may determine that the source of the first training data meets the predetermined condition. Next, the processor 13 may enable the usage permission corresponding to the first training data. Alternatively, if the source verification information records in a plain or coded form that the provider of the first training data is not the target user, then the processor 13 (after executing relevant decoding procedures on the source verification information) may determine that the source of the first training data does not meet the predetermined condition.

In an embodiment, if the usage permission corresponding to the first training data is enabled, the processor 13 may further obtain the storage location information corresponding to the first training data from a resource list. For instance, the resource list may be provided in advance by the provider of the first training data. For instance, this storage location information may be stored in the form of a uniform resource identifier (URI) or other forms in this resource list. The processor 13 may then download the first training data from the cloud storage according to this storage location information.

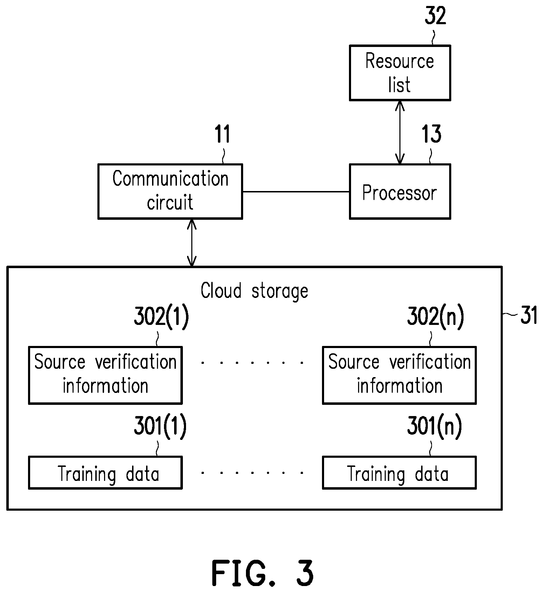

FIG. 3 is a schematic view illustrating execution of controlling the usage permission of the training data according to an embodiment of the disclosure. Referring to FIG. 3, it is assumed that a plurality of pieces of training data 301(1) to 301(n) are stored in a cloud storage 31. The training data 301(1) to 301(n) may include image data, text data, audio data, or other types of data, as long as they can be used for model training. It should be noted that compared to the embodiment of FIG. 2, in the embodiment of FIG. 3, source verification information 302(1) to 302(n) corresponding to the training data 301(1) to 301(n) is also stored in the cloud storage 31.

In an embodiment, the training data 301(i) is the first training data, and the source verification information 302(i) is the source verification information corresponding to the first training data. For instance, both the training data 301(i) and the source verification information 302(i) are uploaded to the cloud storage 31 by a specific user through the first remote device.

In an embodiment, the specific user may provide a resource list 32 through the first remote device. For instance, the resource list 32 may be used to record storage location information corresponding to the training data 301(i) and the source verification information 302(i). For instance, the storage location information may be stored in the resource list 32 in the form of a uniform resource identifier (URI) or other forms. For instance, the storage location information may point to a resource address in the cloud storage 31 for storing or downloading the training data 301(i) and the source verification information 302(i).

In an embodiment, the processor 13 may obtain the storage location information corresponding to the source verification information 302(i) from the resource list 32. According to this storage location information, the processor 13 may obtain the source verification information 302(i) from the cloud storage 31 through the communication circuit 11. The processor 13 may determine whether a source of the training data 301(i) meets the predetermined condition according to the source verification information 302(i). For instance, the processor 13 may parse the source verification information 302(i) based on the digital signature technology or other types of digital verification technology to confirm the source of the training data 301(i). Alternatively, if the source verification information 302(i) records the information of the provider of the training data 301(i) in a plain or coded form, the processor 13 may directly confirm the source of the training data 301(i) according to the source verification information 302(i). If the source of the training data 301(i) meets the predetermined condition, the processor 13 may enable the usage permission corresponding to the training data 301(i). However, if the source of the training data 301(i) does not meet the predetermined condition, the processor 13 may disable the usage permission corresponding to the training data 301(i).

In an embodiment, after enabling the usage permission corresponding to the training data 301(i), the processor 13 may obtain the storage location information corresponding to the training data 301(i) from the resource list 32. According to this storage location information, the processor 13 may download the training data 301(i) from the cloud storage 31 through the communication circuit 11. The processor 13 may then use the training data 301(i) to train the computing model 101 of FIG. 1.

It should be noted that in another embodiment of FIG. 3, in the situation where the usage permission corresponding to the training data 301(i) is disabled, the processor 13 may not download the training data 301(i) from the cloud storage 31, and even more so may not use the training data 301(i) to train the computing model 101 of FIG. 1. In this way, subsequent disputes related to the ownership of the training data used may be avoided, and the legal usage permission for the training data may be ensured.

In an embodiment, the first training data uploaded to the cloud storage by a specific user through the first remote device is processed by compression or encryption. In this way, theft of the first training data can be avoided, and/or the data size of the first training data may be reduced.

In an embodiment, the first remote device may execute hash encoding or other types of encoding on the first training data to be uploaded, so as to generate an identifier corresponding to the first training data. This identifier may uniquely represent the first training data. That is, the identifiers generated for different training data must be (or have a high probability of being) different. This identifier may then be stored in the cloud storage.

Thereafter, whenever a new piece of training data (e.g., the first training data) is to be uploaded to the cloud storage, the first remote device may compare the identifier corresponding to this new training data with the identifiers stored in the cloud storage. If the same identifier already exists in the cloud storage (that is, the identifier corresponding to this new training data is identical to a previously generated identifier), the first remote device may send a notification to remind the provider of the training data that the same training data is already stored in the cloud storage, and repeated uploading is not necessary. In this way, the usage of cloud storage can be effectively saved, and the training data is protected from ownership theft by others.

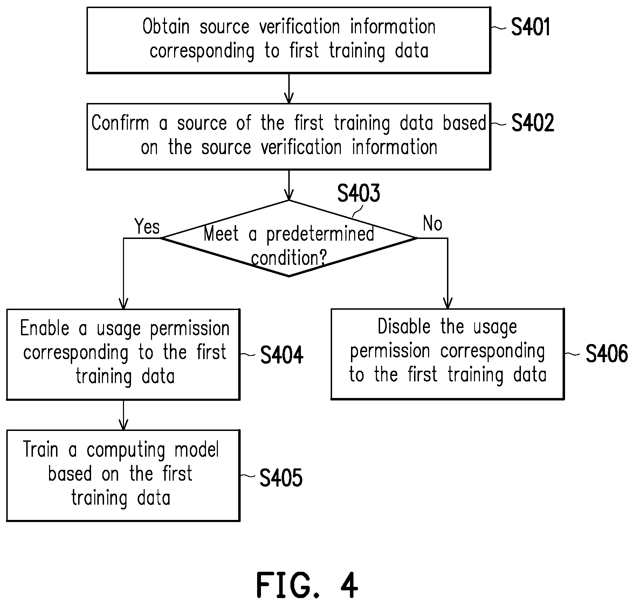

FIG. 4 is a flow chart illustrating a method for controlling a usage permission of training data according to an embodiment of the disclosure. Referring to FIG. 4, in step S401, source verification information corresponding to first training data is obtained. In step S402, a source of the first training data is confirmed based on the source verification information. In step S403, it is determined whether the source of the first training data meets a predetermined condition. If the source of the first training data meets the predetermined condition, in step S404, the usage permission corresponding to the first training data is enabled. In step S405, a computing model is trained based on the first training data. However, if the source of the first training data does not meet the predetermined condition, in step S406, the usage permission corresponding to the first training data is disabled.

Each step of FIG. 4 is described in detail in the foregoing paragraphs, so description thereof is not repeated herein. It should be noted that each step in FIG. 4 may be implemented as a plurality of program codes or circuits, which is not particularly limited by the disclosure. In addition, the method of FIG. 4 may be used in combination with the above-described exemplary embodiments or may be used solely, which is not particularly limited by the disclosure.

In view of the foregoing, in the method and system for controlling the usage permission of the training data provided by the disclosure, the usage permission of the training data may be automatically controlled according to the source of the training data. In this way, disputes that may arise in the future due to unclear sources of training data or using unauthorized training data to train the computing model 101 may be effectively lowered, and the legal usage permission for the training data may further be ensured.

## Claims

1. A method for controlling a usage permission of training data (201(1) to 201(n), 301(1) to 301(n)), comprising:
obtaining source verification information (302(1) to 302(n)) corresponding to first training data;
confirming a source of the first training data based on the source verification information (302(1) to 302(n));
enabling a usage permission corresponding to the first training data if the source of the first training data meets a predetermined condition and training a computing model (101) based on the first training data; and
disabling the usage permission corresponding to the first training data if the source of the first training data does not meet the predetermined condition.

2. The method for controlling the usage permission of the training data (201(1) to 201(n), 301(1) to 301(n)) according to claim 1, further comprising:
allowing the first training data to be used to train the computing model (101) only when the usage permission corresponding to the first training data is enabled.

3. The method for controlling the usage permission of the training data (201(1) to 201(n), 301(1) to 301(n)) according to claim 1, wherein the source verification information (302(1) to 302(n)) is obtained from a block chain network (22), and the step of confirming the source of the first training data based on the source verification information (302(1) to 302(n)) comprises:
confirming whether the source of the first training data meets the predetermined condition based on block chain verification technology.

4. The method for controlling the usage permission of the training data (201(1) to 201(n), 301(1) to 301(n)) according to claim 3, further comprising:
obtaining a transaction record corresponding to the first training data from the block chain network (22) after enabling the usage permission corresponding to the first training data;
obtaining storage location information corresponding to the first training data from the transaction record; and
downloading the first training data from a cloud storage (21, 31) according to the storage location information.

5. The method for controlling the usage permission of the training data (201(1) to 201(n), 301(1) to 301(n)) according to claim 4, wherein the storage location information is stored in a form of a uniform resource identifier in the transaction record.

6. The method for controlling the usage permission of the training data (201(1) to 201(n), 301(1) to 301(n)) according to claim 1, wherein the source verification information (302(1) to 302(n)) is obtained from a cloud storage, and the step of confirming the source of the first training data based on the source verification information (302(1) to 302(n)) comprises:
confirming whether the source of the first training data meets the predetermined condition based on digital verification technology.

7. The method for controlling the usage permission of the training data (201(1) to 201(n), 301(1) to 301(n)) according to claim 6, further comprising:
obtaining storage location information corresponding to the first training data from a resource list (32) after enabling the usage permission corresponding to the first training data; and
downloading the first training data from the cloud storage (21, 31) according to the storage location information.

8. A system (10) for controlling a usage permission of training data (201(1) to 201(n), 301(1) to 301(n)), comprising:
a communication circuit (11);
a storage circuit (12) configured to store a computing model (101); and
a processor (13) coupled to the communication circuit (11) and the storage circuit (12),
wherein the processor (13) is configured to:
obtain, through the communication circuit (11), source verification information (302(1) to 302(n)) corresponding to first training data,
confirm a source of the first training data based on the source verification information (302(1) to 302(n)),
enable the usage permission corresponding to the first training data if the source of the first training data meets a predetermined condition and train the computing model (101) based on the first training data, and
disable the usage permission corresponding to the first training data if the source of the first training data does not meet the predetermined condition.

9. The system (10) for controlling the usage permission of the training data (201(1) to 201(n), 301(1) to 301(n)) according to claim 8, wherein the processor (13) is further configured to:
allow the first training data to be used to train the computing model (101) only when the usage permission corresponding to the first training data is enabled.

10. The system (10) for controlling the usage permission of the training data (201(1) to 201(n), 301(1) to 301(n)) according to claim 8, wherein the source verification information (302(1) to 302(n)) is obtained from a block chain network (22), and the operation of confirming, by the processor (13), the source of the first training data based on the source verification information (302(1) to 302(n)) comprises:
confirm whether the source of the first training data meets the predetermined condition based on block chain verification technology.

11. The system (10) for controlling the usage permission of the training data (201(1) to 201(n), 301(1) to 301(n)) according to claim 10, wherein the processor (13) is further configured to:
obtain a transaction record corresponding to the first training data from the block chain network (22) after enabling the usage permission corresponding to the first training data,
obtain storage location information corresponding to the first training data from the transaction record, and
download the first training data from a cloud storage (21, 31) according to the storage location information.

12. The system (10) for controlling the usage permission of the training data (201(1) to 201(n), 301(1) to 301(n)) according to claim 11, wherein the storage location information is stored in a form of a uniform resource identifier in the transaction record.

13. The system (10) for controlling the usage permission of the training data (201(1) to 201(n), 301(1) to 301(n)) according to claim 8, wherein the source verification information (302(1) to 302(n)) is obtained from a cloud storage (21, 31), and the operation of confirming, by the processor (13), the source of the first training data based on the source verification information (302(1) to 302(n)) comprises:
confirm whether the source of the first training data meets the predetermined condition based on digital verification technology.

14. The system (10) for controlling the usage permission of the training data (201(1) to 201(n), 301(1) to 301(n)) according to claim 13, wherein the processor (13) is further configured to:
obtain storage location information corresponding to the first training data from a resource list (32) after enabling the usage permission corresponding to the first training data, and
download the first training data from the cloud storage (21, 31) according to the storage location information.
